**Europäisches Patentamt**

**European Patent Office**

**Office européen des brevets**

(19)

(11) Veröffentlichungsnummer: **0 241 659**
**A1**

## (12) EUROPÄISCHE PATENTANMELDUNG

(21) Anmeldenummer: **87101714.1**

(22) Anmeldetag: **07.02.87**

(51) Int. Cl.⁴: **F 04 D 29/22**

(30) Priorität: **09.04.86 DE 3611910**

(43) Veröffentlichungstag der Anmeldung: **21.10.87**
**Patentblatt 87/43**

(84) Benannte Vertragsstaaten: **DE ES FR GB IT**

(71) Anmelder: **INA Wälzlager Schaeffler KG,**
**Industriestrasse 1-3 Postfach 1220,**
**D-8522 Herzogenaurach (DE)**

(72) Erfinder: **Langhammer, Hans, Telemannstrasse 9,**
**D-8522 Herzogenaurach (DE)**

(74) Vertreter: **Klug, Horst, Dipl.-Ing. (FH), c/o INA Wälzlager**
**Schaeffler KG Postfach 12 20, D-8522 Herzogenaurach**
**(DE)**

(54) **Laufrad für eine Radialpumpe.**

(57) Ein Laufrad (1) für eine Radialpumpe, welches aus einem gieß- oder spritzbaren insbesondere polymeren Werkstoff gebildet ist und aus zwei im Abstand voneinander angeordneten, wenigstens im Bereich ihrer Außendurchmesser im wesentlichen radial gerichteten Scheiben (2 und 3) besteht, welche durch Schaufeln (4) einstückig miteinander verbunden sind, wobei wenigstens eine Scheibe (2) ringförmig ausgebildet und die andere mit Mitteln zur Verbindung des Laufrads (1) mit einer Welle versehen ist, kann dadurch in einer Dauerform ohne bewegliche Kerne einstückig hergestellt werden, daß die ringförmige Scheibe (2) einen Innendurchmesser aufweist, der mindestens dem Außendurchmesser der anderen Scheibe (3) entspricht.

INA Wälzlager Schaeffler KG, Industriestraße 1-3

8522 Herzogenaurach

ANR 17 17 332

PG 2080

## Laufrad für eine Radialpumpe

Die Erfindung betrifft ein Laufrad für eine Radialpumpe, insbesondere Kühlwasserpumpe für Kraftfahrzeuge, welches aus einem gieß- oder spritzbaren insbesondere polymeren Werkstoff gebildet ist und aus zwei im Abstand voneinander angeordneten, wenigstens im Bereich ihrer Außendurchmesser im wesentlichen radial gerichteten Scheiben besteht, welche durch Schaufeln einstückig miteinander verbunden sind, wobei wenigstens eine Scheibe ringförmig ausgebildet und die andere mit Mitteln zur Verbindung des Laufrads mit einer Welle versehen ist.

Die Herstellung derartiger Laufräder, die in Anbetracht der sehr hohen benötigten Stückzahlen aus Wirtschaftlichkeitsgründen in Serienwerkzeugen erfolgt, ist bisher mit beachtlichen Schwierigkeiten verbunden, da diese Serienwerkzeuge bewegliche Formteile zur Bildung der Schaufeln aufweisen, die, um ein Entformen des Laufrades überhaupt zu ermöglichen, zuvor aus dem Raum zwischen den Scheiben zurückgezogen werden müssen. Hierzu sind aufwendige Mechanismen erforderlich, die das Serienwerkzeug verteuern und außerdem verschleißanfällig machen.

Man hat zwar versucht, diese Schwierigkeiten zu umgehen, indem man einseitig offene Laufräder, ohne ringförmige Scheibe verwendet hat (DE-OS 33 35 213) jedoch konnten diese Laufräder hinsichtlich ihres hydraulischen Wirkungsgrads nicht befriedigen. Man hat deshalb außerdem vorgeschlagen, an den freien Enden der Schaufeln von einseitig offenen Laufrädern eine getrennt hergestellte ringförmige Scheibe zu befestigen, jedoch ließ die Festigkeit zu wünschen übrig, da sich das Fehlen einer einstückigen Verbindung der Schaufeln mit beiden Scheiben nachteilig auswirkte.

Der Erfindung liegt die Aufgabe zugrunde, ein gattungsgemäßes Laufrad zu schaffen, das in einem Serienwerkzeug ohne bewegliche Formteile hergestellt werden kann.

Diese Aufgabe wird dadurch gelöst, daß die ringförmige Scheibe einen Innendurchmesser aufweist, der mindestens dem Außendurchmesser der anderen Scheibe entspricht.

Das erfindungsgemäße Laufrad weist somit keine seiner axialen Entformung entgegenstehenden Hinterschneidungen auf und kann deshalb in einem Serienwerzeug ohne bewegliche Formteile hergestellt werden. Das erfindungsgemäße Laufrad kann demzufolge äußerst kostengünstig in großen Stückzahlen hergestellt werden und weist außerdem eine hohe Festigkeit auf. Dabei kann der Innendurchmesser der ringförmigen Scheibe auch geringfügig kleiner als der Außendurchmesser der anderen Scheibe sein, sofern nur sichergestellt ist, daß das Laufrad unter ausschließlich elastischer Verformung aus dem Serienwerkzeug entnommen werden kann.

Falls dies im Interesse einer Verbesserung der Leistung der Pumpe erforderlich ist, können nach einer Variante der Erfindung die Schaufeln den die Außendurchmesser der Scheiben enthaltenden Kegelmantel nach außen überragen.

Bei einem derartigen Laufrad kann nach einer Ausführungsform der Erfindung vorgesehen sein, daß der ringförmigen Scheibe axial gegenüberliegend ein Verschlußring vorgesehen ist, der mit der anderen Scheibe einerseits und den von der ringförmigen Scheibe axial entfernten Begrenzungskanten der Schaufeln andererseits verbunden ist. Da der Verschlußring außer an den Schaufeln auch an der anderen Scheibe befestigt ist, wird durch diese Maßnahme eine wirkungsvolle Versteifung der Schaufeln

PG 2080                          - 3 -

erreicht. Außerdem wird der hydraulische Wirkungsgrad verbessert.

Nach einer Variante der Erfindung ist der Verschlußring stoffschlüssig mit der anderen Scheibe und den Begrenzungskanten der Schaufeln verbunden. Der Verschlußring kann aber auch nur wenigstens mit den Schaufeln verbunden sein.

In den beigefügten Zeichnungen sind Ausführungsbeispiele der Erfindung dargestellt. Es zeigen:

Fig. 1 einen teilweisen Längsschnitt durch ein erfindungsgemäßes Laufrad,

Fig. 2 einen teilweisen Längsschnitt durch eine ein erfindungsgemäßes Laufrad enthaltendes Serienwerkzeug,

Fig. 3 eine teilweise Ansicht eines erfindungsgemäßen Laufrades,

Fig. 4 einen Schnitt nach der Linie IV-IV in Fig. 3 und

Fig. 5 einen Schnitt nach Linie IV-IV in Fig. 3 durch das Laufrad vor der Befestigung des Verschlußringes.

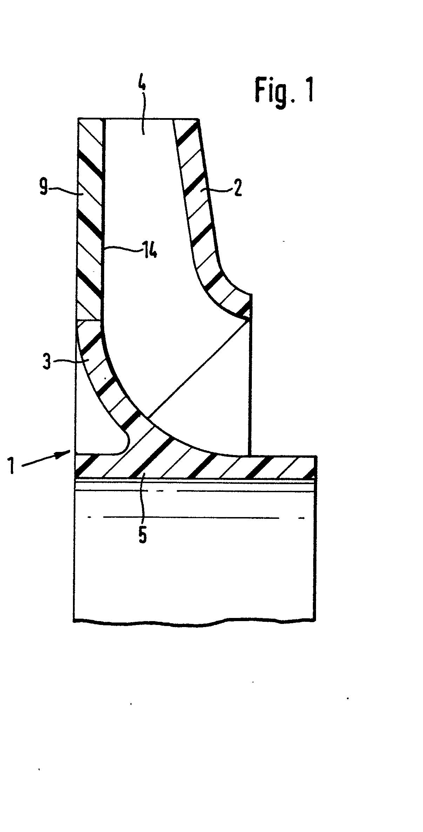

Fig. 1 zeigt ein erfindungsgemäßes Laufrad 1 für eine als Radialpumpe ausgebildete Kühlwasserpumpe für Kraftfahrzeuge, welches aus einem polymeren Werkstoff gebildet ist. Das Laufrad 1 besteht aus zwei im Abstand voneinander angeordneten Scheiben 2 und 3, die im Bereich ihrer Außendurchmesser im wesentlichen radial gerichtet und durch Schaufeln 4 miteinander verbunden sind.

Die Scheibe 2 ist ringförmig ausgebildet, während die Scheibe 3 mit einer Nabe 5 versehen ist, die es gestattet, das Laufrad 1 auf einer nicht gezeigten Welle oder dergleichen zu befestigen. Die Schaufeln 4 sind um zur Laufradachse parallele Achsen gekrümmt.

Wie aus Fig. 1 ersichtlich entspricht der Außendurchmesser der Scheibe 3

0241659

dem Innendurchmesser der Scheibe 2. Dies hat zur Folge, daß das Laufrad 1 in einem axial teilbaren Serienwerkzeug ohne bewegliche Formteile zur Bildung der Schaufeln 4 hergestellt werden kann.

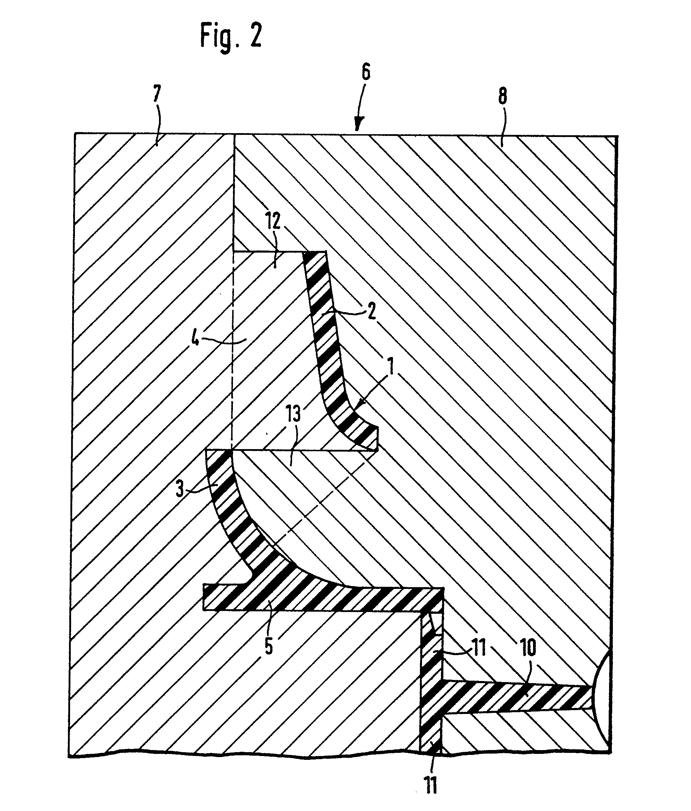

Ein geeignetes Serienwerkzeug 6 ist in Fig. 2 dargestellt und besteht aus den beiden axial trennbaren Formteilen 7 und 8, die einen Formhohlraum einschließen, der der Gestalt des Laufrades 1 ohne den in Fig. 1 gezeigten und getrennt von diesem hergestellten Verschlußring 9 entspricht. Der polymere Werkstoff kann zur Bildung des Laufrades durch einen in dem Formteil 8 vorgesehenen Angußkanal 10 und in dem Formteil 7 vorgesehene Kanäle 11 in den Formhohlraum gelangen.

Zur Bildung der Schaufeln 4 besitzen die Formteile 7 und 8 Fortsätze 12 und 13, die Ausnehmungen enthalten, die gemeinsam die Kontur der strichliert angedeuteten Schaufeln 4 ergeben. Da außerhalb des Außendurchmessers der Scheibe 3 der Fortsatz 12 des Formteils 7 und innerhalb des Innendurchmessers der ringförmigen Scheibe 2 der Fortsatz 13 des Formteils 8 die Bildung der Schaufeln 4 bewirkt und der Außendurchmesser der Scheibe 3 dem Innendurchmesser der ringförmigen Scheibe 2 entspricht, ist die Trennfläche zwischen den beiden Formteilen 7 und 8 im Bereich von deren Fortsätzen 12 und 13 zylindrisch ausgebildet. Da außerdem wie oben beschrieben die Schaufeln 4 um Achsen gekrümmt sind, die parallel zur Laufradachse verlaufen, können die beiden Formteile 7 und 8 axial getrennt werden und das Laufrad 1 aus dem Serienwerkzeug 6 entnommen werden, ohne daß diese bewegliche Kerne zur Bildung der Schaufeln 4 besitzen muß.

Wie aus Fig. 1 ersichtlich ist, überragen die Schaufeln 4 den die Außendurchmesser der Scheiben 2 und 3 enthaltenden Kegelmantel nach außen, wodurch eine erhöhte Leistung der Pumpe erzielt wird.

Wie Fig. 1 weiter zeigt, ist der bereits erwähnte Verschlußring 9, der getrennt von dem Laufrad 1 hergestellt wird, mit den Begrenzungskanten 14 der Schaufeln 4 sowie der Scheibe 3 stoffschlüssig verbunden. Hierdurch wird die Festigkeit des Laufrads 1 gesteigert und dessen hydraulischer Wirkungsgrad verbessert.

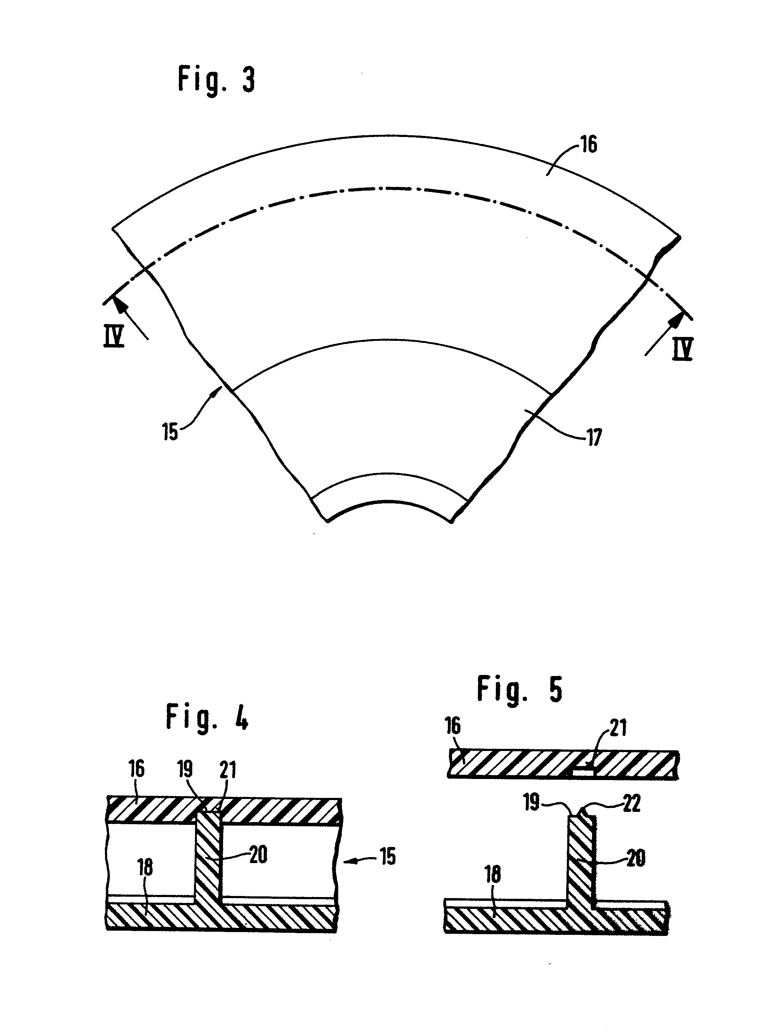

In den Fig. 3 bis 5 ist ein erfindungsgemäßes Laufrad 15 dargestellt, das sich von dem zuvor beschriebenen durch die Art der Verbindung des Verschlußringes 16 mit der Scheibe 17 und den von der ringförmigen Scheibe 18 axial entfernten Begrenzungskanten 19 der Schaufeln unterscheidet. Während der Verbindung zwischen dem inneren Rand des Verschlußringes 16 und dem äußeren Umfang der Scheibe 17 stoffschlüssig erfolgt, ist der Verschlußring 16 an seiner den Schaufeln 20 zugewandten Seitenfläche mit Nuten 21 versehen, deren Verlauf dem der Schaufeln 20 entspricht, welche in die Nuten 21 formschlüssig eingreifen.

Dabei können die Begrenzungskanten 19, wie aus Fig. 5 ersichtlich ist, mit Vorsprüngen 22 versehen sein, durch die es möglich ist, zusätzlich zu der beschriebenen formschlüssigen Verbindung auch eine stoffschlüssige Verbindung zu schaffen, indem die Vorsprünge 22, z. B. durch einen Ultraschall-Schweißvorgang, mit den Grundflächen der Nuten 21 verbunden werden, wobei die Vorsprünge 22 plattgedrückt werden.

Obwohl ein solches Ausführungsbeispiel in den Figuren nicht gezeigt ist, kann der Innendurchmesser der ringförmigen Scheibe auch größer als der Außendurchmesser der anderen Scheibe sein.

Außerdem kann die Scheibe mit anderen geeigneten Mitteln als der im Ausführungsbeispiel gezeigten Nabe zur Befestigung des Laufrades auf einer Welle oder dergleichen versehen sein.

Schließlich sind die beschriebenen Arten der Befestigung des Verschlußringes nur beispielhaft zu verstehen.

0241659

INA Wälzlager Schaeffler KG, Industriestraße 1-3

8522 Herzogenaurach

ANR 17 17 332

PG 2080

## Ansprüche

1. Laufrad für eine Radialpumpe, insbesondere Kühlwasserpumpe für Kraftfahrzeuge, welches aus einem gieß- oder spritzbaren insbesondere polymeren Werkstoff gebildet ist und aus zwei im Abstand voneinander angeordneten, wenigstens im Bereich ihrer Außendurchmesser im wesentlichen radial gerichteten Scheiben besteht, welche durch Schaufeln einstückig miteinander verbunden sind, wobei wenigstens eine Scheibe ringförmig ausgebildet und die andere mit Mitteln zur Verbindung des Laufrads mit einer Welle versehen ist, **dadurch gekennzeichnet,** daß die ringförmige Scheibe (2, 18) einen Innendurchmesser aufweist, der mindestens dem Außendurchmesser der anderen Scheibe (3, 17) entspricht.

2. Laufrad nach Anspruch 1, **dadurch gekennzeichnet,** daß die Schaufeln (4, 20) den die Außendurchmesser der Scheiben (2 und 3, 18 und 17) enthaltenden Kegelmantel nach außen überragen.

3. Laufrad nach Anspruch 2, **dadurch gekennzeichnet,** daß der ringförmigen Scheibe (2, 18) axial gegenüberliegend ein Verschlußring (9, 16) vorgesehen ist, der mit der anderen Scheibe (3, 17) einerseits und den von der ringförmigen Scheibe (2, 18) axial entfernten Begrenzungskanten (14, 19) der Schaufeln (4, 20) andererseits verbunden ist.

4. Laufrad nach Anspruch 3, **dadurch gekennzeichnet,** daß der Verschlußring (9, 16) stoffschlüssig mit der anderen Scheibe (3, 17) und den

0241659

Begrenzungskanten (14, 19) der Schaufeln (4, 20) verbunden ist.

5. Laufrad nach Anspruch 3 oder 4, **dadurch gekennzeichnet,** daß der Verschlußring (16) wenigstens mit den Schaufeln (20) verbunden ist.

Fig. 1

## Fig. 2

0241659

## Fig. 3

## Fig. 4

## Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 3, Nr. 49 (M-57), 26. April 1979; & JP-A-54 29 102 (KUBOTA TEKKO K.K.) 03-05-1979 | 1,3 | F 04 D 29/22 |
| Y | US-A-3 070 026 (LUNG) * Spalte 2, Zeile 57 - Spalte 3, Zeile 5; Figur 2 * | 1 | |
| Y | GB-A- 909 510 (FARE) * Seite 1, Zeilen 34-47, Zeile 64 - Ende; Seite 2, Zeilen 1-15,22-33; Figuren 1-4 * | 1,3 | |
| A | | 2,4,5 | |
| | ----- | | **RECHERCHIERTE SACHGEBIETE (Int. Cl.4)** F 04 D 29/00 |

Der vorliegende Recherchenbericht wurde für alle Patentansprüche erstellt.

| Recherchenort DEN HAAG | Abschlußdatum der Recherche 24-02-1987 | Prüfer KAPOULAS T. |
|---|---|---|